# EUROPEAN PATENT APPLICATION

(11) **EP 3 422 038 A1**
(43) Date of publication of application: **02.01.2019**
(21) Application number: 17179062.9
(22) Date of filing: 30.06.2017
(51) Int. Cl.: G01S 5/00, G06F 21/44, G08G 5/00

(54) **UNMANNED AERIAL VEHICLE CONTROL SYSTEM**

(71) Applicant: Deutsche Telekom AG, 53113 Bonn (DE)
(72) Inventor: LEONHARD, Matthias, 53227 Bonn (DE)
(74) Representative: Patentship Patentanwaltsgesellschaft mbH

(57) **Abstract**

The disclosure relates to an unmanned aerial vehicle (UAV) control system (300, 400, 500), comprising: an air traffic control system (150) comprising at least one processor; and a plurality of UAVs (110, 120, 130) registered via a mobile network (140, 141, 142) with the air traffic control system (150), each (110) of the UAVs (110, 120, 130) comprising: a GNSS receiver (511) configured to receive location information (514) from at least one satellite (520) for indicating a location of the UAV (110); a wireless local area network (LAN) transceiver (513) configured to detect at least one nearby object (120) based on a wireless receive signal received from the at least one nearby object (120), the wireless receive signal comprising one of the following registration information (515): a registration number of the at least one nearby object (120), a faked registration number of the at least one nearby object (120) or a suppressed registration number of the at least one nearby object (120); and a mobile radio transceiver (512) configured to transmit the registration information (515) of the at least one nearby object (120) together with the location information (514) indicating the location of the UAV (110) to the air traffic control system (150), wherein the air traffic control system (150) is configured to detect an unknown object (121, 131) based on the registration information (515) and the location information (514) received from the plurality of UAVs (110, 120, 130).

## Description

### TECHNICAL FIELD

The present disclosure relates to an unmanned aerial vehicle (UAV) control system, in particular a control system applying automated drone detection mechanisms and an UAV reporting to an UAV control system. The disclosure further relates to a method for detecting an unknown object.

### BACKGROUND

According to current regulation drones and/or UASs (unmanned aerial systems) and/or UAVs (unmanned aerial vehicles) may only be used within line of sight and in specific countries for specific cases on predefined routes beyond visual of line of sight. Since most commercial use cases require automated routing beyond visual line of sight, systems will soon be established enabling a safe and fair integration of UAS in the lower airspace.

Compared to ground vehicles (e.g. cars, bikes, etc.), which are limited to ground routes, it will be very complex to protect society from uncontrolled or unguided low flying objects, especially in crowded urban areas, such as metropolitan centers. Due to their efficiency, accuracy and speed drones/ UAS are optimal not just for commercial use cases, but as well for criminal reasons (e.g. for transportation of illegal goods, terrorism, breach of privacy, etc.).

It will thus be one of the core challenges of the coming years to develop solutions preventing incidents and/or improving security.

### SUMMARY

It is the object of the invention to provide a solution for enabling a safe and fair integration of UASs in the lower airspace. It is particularly an object of the invention to provide a concept for controlling objects such as UAVs or drones preventing incidents and improving security.

This object is achieved by the features of the independent claims. Further implementation forms are apparent from the dependent claims, the description and the figures.

Drones or in general unmanned systems or UAVs as described in the following are widely controlled via a wireless mobile network. Are they flying/driving in visual line of sight they are typically connected and steered via WiFi, beyond visual line of sight they may use mobile networks of telecommunication providers.

In order to describe the invention in detail, the following terms, abbreviations and notations will be used:
- UAV:: unmanned aerial vehicle or drone
- UAS:: unmanned aerial system
- RPAS:: remotely piloted aircraft system or subject
- GNSS:: Global Navigation Satellite System
- GPS:: Global Positioning System
- 5G:: fifth generation mobile network
- LTE:: Long Term Evolution
- UTM:: UAV traffic management (system)
- ATC:: Air traffic control
- KPI:: Key Performance Indicator
- BS:: Base Station, eNodeB
- RF:: radio frequency

In the following description, the term UAV refers to an unmanned aerial vehicle or a remotely piloted aircraft subject or system (RPAS). In the following, unmanned aerial vehicles (UAVs) and drones are described. A UAV, commonly known as a drone, unmanned aircraft system (UAS), remotely piloted aircraft system (RPAS), remotely piloted aircraft subject or by several other names, is an aircraft without a human pilot aboard. A UAV is defined as a powered, aerial vehicle that does not carry a human operator, uses aerodynamic forces to provide vehicle lift, can fly autonomously or be piloted remotely, can be expendable or recoverable, and can carry a payload. The flight of UAVs may operate with various degrees of vehicular automation: either under remote control by a human operator, or fully or intermittently autonomously, by onboard computers.

UAVs as described in the following may be equipped with global navigation satellite system (GNSS) receivers (e.g. GPS, GLONASS, Galileo) to determine their location to high precision (within a few meters) using time signal transmitted along a line-of-sight propagation by radio from satellites to provide autonomous geo-spatial positioning. The GNSS receivers can be used for providing position, navigation or for tracking the position. Additionally the received signals allow the electronic receiver to calculate the current local time to high precision, which allows time synchronisation.

In the following, nearby objects are described. An object is nearby a UAV or drone if it is within the range of the wireless LAN transceiver of the UAV/drone, e.g. within the reachability of a WiFi, Bluetooth or Zigbee network formed by the UAV/drone. Hence, "nearby" means to be within the neighborhood of the UAV/ drone, for example within a distance of about 10, 20, 30, 40, 50, 100, 150, 200 meters.

According to a first aspect, the invention relates to an unmanned aerial vehicle (UAV) control system, comprising: an air traffic control system comprising at least one processor; and a plurality of UAVs registered via a mobile network with the air traffic control system, each of the UAVs comprising: a GNSS receiver configured to receive location information from at least one satellite for indicating a location of the UAV; a wireless local area network (LAN) transceiver configured to detect at least one nearby object based on a wireless receive signal received from the at least one nearby object, the wireless receive signal comprising one of the following registration information: a registration number of the at least one nearby object, a faked registration number of the at least one nearby object or a suppressed registration number of the at least one nearby object; and a mobile radio transceiver configured to transmit the registration information of the at least one nearby object together with the location information indicating the location of the UAV to the air traffic control system, wherein the air traffic control system is configured to detect an unknown object based on the registration information and the location information received from the plurality of UAVs.

Such a UAV control system is able to detect the two scenarios of a faked registration and a missing or suppressed registration of a malicious UAV. Hence, the system provides a solution for enabling a safe and fair integration of UASs in the lower airspace. The system can control objects such as UAVs or drones preventing incidents and improving security.

In an implementation of the UAV control system, the wireless LAN transceiver is configured to transmit a wireless transmit signal comprising a registration number of the UAV; and the mobile radio transceiver is configured to transmit the registration number of the UAV to the air traffic control system.

This provides the advantage that the UAV transmitting its registration number to nearby objects such as other UAVs or drones and additionally to the ground control system can be efficiently detected by other UAVs. Hence, the UAV not only improves security of the whole system but also its own security against collision with other UAVs

In an implementation of the UAV control system, the mobile radio transceiver is configured to report an unknown object to the air traffic control system if the registration information includes a suppressed registration number.

This provides the advantage that a malicious flying object, e.g. UAV, UAS or drone may be efficiently detected by a nearby flying UAV which is connected to the UAV control system, simply by checking if the UAV, UAS or drone has sent its registration number as required by the system.

In an implementation of the UAV control system, the faked registration number is associated with a location of the at least one nearby object not corresponding to a location derived from satellite-based location data.

This provides the advantage that a malicious UAV/UAS or drone reporting a faked registration number can be efficiently detected by the air traffic control system by matching stored location information with reported location information.

In an implementation of the UAV control system, the air traffic control system comprises a data base configured to store for each registered UAV the received registration number together with the received location information.

This provides the advantage that the data base provides a large amount of data associating multiple reported registration numbers with corresponding location information which can be used for checking if one reported registration number is correct.

In an implementation of the UAV control system, the air traffic control system is configured to detect an unknown object based on matching the received registration information with location information stored within data base entries of registered UAVs.

This provides the advantage that a faked or suppressed registration number can be easily detected.

In an implementation of the UAV control system, the data base is configured to additionally store the registration information of the at least one nearby object received from the plurality of UAVs together with the location information received from the respective UAVs.

This provides the advantage that a faked or suppressed registration number can be more accurately detected due to the larger amount of available data.

In an implementation of the UAV control system, the air traffic control system is configured to detect an unknown object based on matching the received registration information and location information with data base entries of registered UAVs and data base entries of nearby objects.

This provides the advantage that unknown objects can be efficiently detected.

In an implementation of the UAV control system, the air traffic control system is configured to detect an unknown object based on correlating the registration information and location information received from multiple UAVs.

This provides the advantage that unknown objects can be better detected due to correlation effects when correlation over a large amount of data.

In an implementation of the UAV control system, the air traffic control system is configured to process a flight direction and determine an estimated route of a detected unknown object based on the registration information and location information received from multiple UAVs.

This provides the advantage that due to processing data from multiple UAVs a three-dimensional air map can be generated which precisely predicts flight direction and estimated route of multiple unknown objects.

In an implementation of the UAV control system, the air traffic control system is configured to initiate emergency procedures based on detecting an unknown object.

This provides the advantage that safety against collisions can be improved.

According to a second aspect, the invention relates to an unmanned aerial vehicle (UAV), comprising: a GNSS receiver configured to receive location data from at least one satellite for indicating a location of the UAV; a wireless local area network (LAN) transceiver configured to detect at least one nearby object based on a wireless receive signal received from the at least one nearby object, the wireless receive signal comprising one of the following registration information: a registration number of the at least one nearby object, a faked registration number of the at least one nearby object or a suppressed registration number of the at least one nearby object; and a mobile radio transceiver configured to transmit the registration information of the at least one nearby object together with location information indicating the location of the UAV to an air traffic control system.

Such a UAV is able to report the two scenarios of a faked registration and missing or suppressed registration of malicious UAVs to an aerial control system. Hence, the UAV can be integrated in a safe and fair manner in the lower airspace. The UAV can control objects such as other UAVs or drones preventing incidents and improving security.

In an implementation of the UAV, the wireless LAN transceiver is configured to transmit a registration number of the UAV; and the mobile radio transceiver is configured to transmit the registration number of the UAV to the air traffic control system.

This provides the advantage that the UAV transmitting its registration number to nearby objects such as other UAVs or drones and additionally to the ground control system can be efficiently detected by other UAVs. Hence, the UAV not only improves security of the whole system but also its own security against collision with other UAVs

In an implementation of the UAV, the mobile radio transceiver is configured to report an unknown object to the air traffic control system if the registration information includes a suppressed registration number.

This provides the advantage that a malicious nearby flying object, e.g. UAV, UAS or drone may be efficiently detected by the UAV, simply by checking if the UAV, UAS or drone has sent its registration number as required by the system.

According to a third aspect, the invention relates to a method for detecting an unknown object, the method comprising: receiving location information from at least one unmanned aerial vehicle (UAV) of a plurality of UAVs, the location information indicating a location of the at least one UAV; receiving registration information from the at least one UAV, the registration information comprising one of the following: a registration number of at least one object nearby the at least one UAV, a faked registration number of the at least one nearby object or a suppressed registration number of the at least one nearby object; and detecting an unknown object based on the registration information and the location information received from the at least one UAV.

Such a method for detecting unknown objects is able to detect the two scenarios of a faked registration and a missing or suppressed registration of a malicious UAV. Hence, the method provides a solution for enabling a safe and fair integration of UASs in the lower airspace. The method can control objects such as UAVs or drones preventing incidents and improving security.

### BRIEF DESCRIPTION OF THE DRAWINGS

Further embodiments of the invention will be described with respect to the following figures, in which:
Fig. 1 shows a schematic diagram illustrating a basic drone control system 100.
Fig. 2 shows a schematic diagram illustrating security gaps of the basic drone control system 100.
Fig. 3 shows a schematic diagram illustrating an enhanced drone control system 300 with automated drone detection mechanism according to the disclosure.
Fig. 4 shows a schematic diagram illustrating an enhanced drone control system 400 according to the disclosure which tackles the security gaps shown in Fig. 2.
Fig. 5 shows a schematic diagram illustrating a UAV control system 500 according to the disclosure.
Fig. 6 shows a schematic diagram illustrating a method 600 for detecting an unknown object according to the disclosure.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

UAVs and drones as described in the following may apply various communication techniques, in particular utilizing radio control based on mobile communication standards such as LTE, in particular LTE-A and/or OFDM and successor standards such as 5G or based on IEEE 802.11 networks such as WiFi or based on other communication standards such as Bluetooth or Zigbee. The components and network nodes of such systems may be implemented as electronic devices or electronic network entities. The described devices and systems may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

Air traffic control (ATC) as described in the following is a service provided by ground-based controllers who direct aircraft on the ground and through controlled airspace, and can provide advisory services to aircraft in non-controlled airspace. The primary purpose of ATC worldwide is to prevent collisions, organize and expedite the flow of air traffic, and provide information and other support for pilots. In some countries, ATC plays a security or defensive role, or is operated by the military. To prevent collisions, ATC enforces traffic separation rules, which ensure each aircraft maintains a minimum amount of empty space around it at all times. Many aircraft also have collision avoidance systems, which provide additional safety by warning pilots when other aircraft get too close.

UAV traffic management (UTM) as described in the following is a cloud-based system that helps manage traffic at low altitudes and avoid collisions of UAVs being operated beyond visual line of sight.

UAVs and drones as described in the following may be equipped with SIM cards, embedded SIMs, electronic SIMs or Software SIMs. A subscriber identity module or subscriber identification module (SIM) is an integrated circuit that is intended to securely store the international mobile subscriber identity (IMSI) number and its related key, which are used to identify and authenticate subscribers on mobile telephony devices (such as mobile phones and computers). Upcoming new generation of SIM is called e-SIM or eSIM (embeddedSIM), which is non-replaceable embedded chip which may be soldered directly onto a circuit board.

A service set (SS) as described in the following is a set consisting of all the devices associated with a consumer or enterprise IEEE 802.11 wireless local area network (WLAN). The service set can be local, independent, extended or mesh. Service sets have an associated identifier, the service set identifier, which consists of 32 octets that frequently contains a human readable identifier of the network, also referred to as the "name" of the network as described in the following. The basic service set (BSS) provides the basic building-block of an 802.11 wireless LAN. In infrastructure mode, a single access point (AP) together with all associated stations (STAs) is called a BSS. The access point acts as a master to control the stations within that BSS; the simplest BSS consists of one access point and one station.

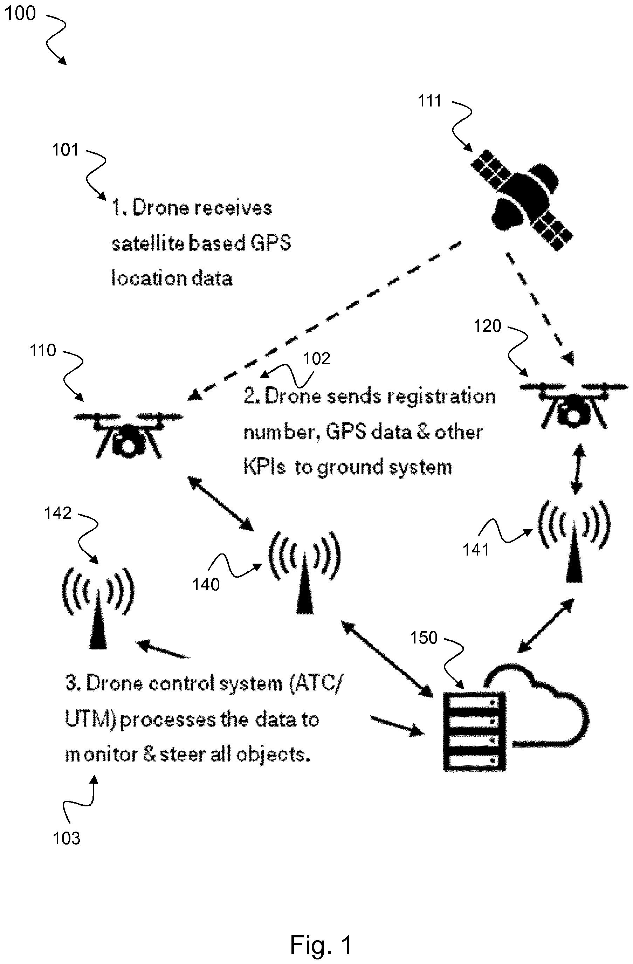

Fig. 1 shows a schematic diagram illustrating a basic drone control system 100.

This basic drone control system 100 can connect all drones/ UAS 110, 120 with each other thereby providing all relevant information to all participants preventing collisions and controlling flight routes, while enabling immediate take-over and landing of objects considered to be a threat.

In this system 100 drones 110, 120 continuously report their registration number ("name"), GPS coordinates, flight direction and other key parameters to a ground control system 150, which then monitors and coordinates all activities, projects critical situations, warns objects and their owners and intervenes, where necessary.

The following tasks are performed by the basic drone control system as shown in Fig. 1: In a first block 101, drones 110, 120 receive their corresponding satellite 111 based GPS location data. In a second block 102 the drones 110, 120 send their corresponding registration number, GPS data and other KPIs to ground system 150 via mobile network 140. In a third block 103, drone control system 150 (e.g. ATC/UTM) processes the data to monitor and steer all objects.

Additionally, all drones 110, 120 that fly autonomously beyond visual line of sight may have on-board detect & avoid systems, screening the surrounding area for obstacles and other moving objects, clustering encounters and preventing accidents with those by applying standardized rules.

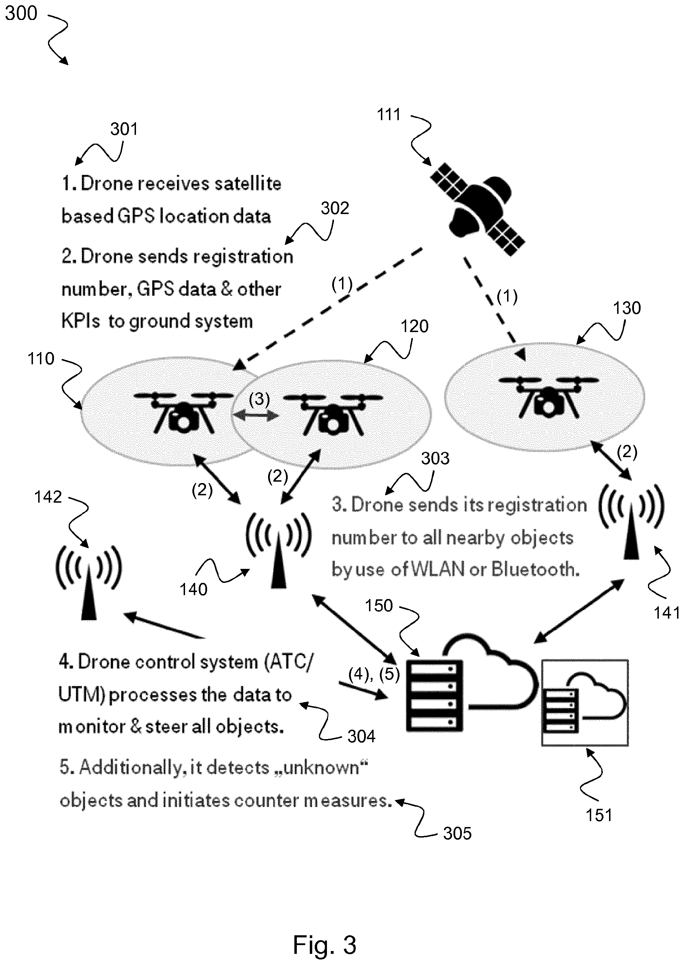

While this basic drone control system 100 creates a safe and protected environment for all vehicles in the system 100, it does not provide a solution for those that are not connected to the system 100 incidentally or purposely. A solution for such situations is provided by the enhanced drone control systems 300, 400, 500 as described below with respect to Figures 3 to 5.

Standard security measures may be similar to current airspace systems, using radar and similar systems to detect objects and map their position with the drone/ UAS control system. Once un-identified drones / UAS are found, counter-measures can be initiated, either with police drones stopping the intruder or with ground systems taking over the control of the object. Additionally, defense systems may be installed on and around important buildings. Those systems may work well in rural areas and open spaces of about 100 meters or more above the ground, where full line of sight is given. Sufficient coverage can however not be guaranteed in dense urban areas or below about 50 meters, where buildings, trees, canyons, bridges and corners prevent line of sight. Unfortunately in those areas most drones/ UAS will fly, partly in short distance to protected areas and buildings, leaving only short response times to those security systems.

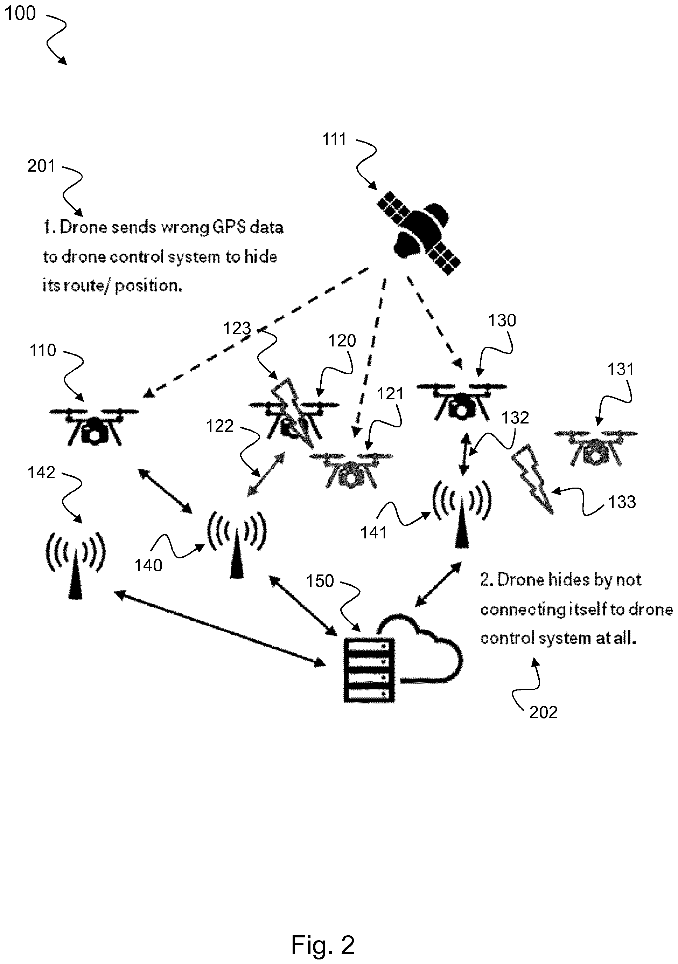

Therefore standard security measures may not be sufficient in at least the two scenarios shown in Fig. 2: A) Drones/UASs purposely reporting wrong GPS location data may not be detected fast enough. B) Drones/ UAS that are purposely not connected to the system may likely not be spotted at all.

Fig. 2 shows a schematic diagram illustrating security gaps of the basic drone control system 100. There may be the following three scenarios for the basic drone control system 100: In a first scenario, the drone 110 reports its registration information, such as registration name or registration number via the mobile network 140 to the ground control system 150. In a second scenario, drone 121 sends wrong GPS data 123 to nearby drone 120 to hide its route/position. Drone 120 hence reports the wrong location to drone control system 100 which records a faked position of the drone 121. In a third scenario, drone 131 hides its location 133 by not connecting itself to ground control system 150 at all.

A solution for such situations is provided by the enhanced drone control systems 300, 400, 500 as described below with respect to Figures 3 to 5.

Fig. 3 shows a schematic diagram illustrating an enhanced drone control system 300 with automated drone detection mechanism according to the disclosure. The enhanced drone control system 300 includes a plurality of drones 110, 120, 130 or UAVs connected via a mobile network 140, 141, 142 to a ground control system 150 with (optionally redundant) multiple processing sites 151 for processing the processing/computing tasks of the ground control system 150. The enhanced drone control system 300 may perform the following tasks: In a first block 301, drones receive corresponding satellite based GPS location data indicating a location of the respective drones 110, 130. In a second block 302, each drone 110, 120, 130 sends registration number, GPS data and/or other KPIs to ground system 150 (via mobile network 140, 141, 142). In a third block 303, each drone 110, 120, 130 sends its registration number to all nearby objects by use of wireless LAN or Bluetooth (or Zigbee). In a fourth block 304, ground control system (ATC/UTM) 150 processes the data to monitor and steer all objects. In an additional fifth block 305, ground control system 150 detects "unknown" objects and initiates counter measures.

The automated drone detection mechanism provides a valuable expansion of the basic drone control system (as depicted in Figure 1) for legal drones/UASs to detect illegally flying objects, predict their routes and prevent criminal activity especially in urban and crowded areas. In the basic drone control system 100 all legal drones/ UAS, connected to the system may continuously report among other information their identification number to a ground or satellite system 150. Additionally, all drones/ UAS may currently be built with wireless LAN connections to enable line of sight pilot control. The automated drone detection mechanism combines the information continuously reported to the ground control system 150 with the existing wireless LAN, e.g. WiFi or Bluetooth or Zigbee connection to significantly increase security in lower airspace as shown in Fig. 3.

It works in the following way:
1) Drones/ UAS 110, 120, 130 need to be programmed to continuously send out their registration number ("name") by use of W-LAN (or Bluetooth) to all nearby objects & related ground systems 150.
2) The more urban an area is, the more drones/ UAS 110, 120, 130 will be flying close to each other, connected to the state-of-the-art drone control system.
3) Each drone/ UAV 110, 120, 130 connected to the system 300 will add the registration numbers of each nearby object to the data it anyhow delivers to the basic drone control system 100 described above with respect to Figures 1 and 2.
4) Thus each drone 110, 120, 130 continuously reports not just its own "name" and GPS location data, but as well the "names" and GPS location of all other nearby objects. For example drone 110 reports nearby drone 120 and vice versa.
5) In case the detect & avoid system of a drone/ UAS 110, 120, 130 does not receive the name of the moving object, it reports an "unknown" object.
6) The control system on the ground 150, 151 may be expanded to additionally map the data it receives about nearby objects (e.g. data from drone 110 about nearby object 120), thereby adding another source of information to ensure GPS coordinates as reported by the drone fit to the position it has according to the information as delivered by each object.
7) In case an "unknown" moving object cannot be mapped to a legal one, registered in the system, emergency procedures may be initiated (e.g. police drones can be started and ground or defense systems may be activated).
8) With multiple reports from different drones/ UAS within the same area, are reporting an "unknown" moving object, the system can calculate the flight direction, project a route and warn potential targets.

With this drone-to-drone detection mechanism a higher level of security can be reached in exactly those regions, which are only sub-optimally served by standard security measures (and of course also in other regions).

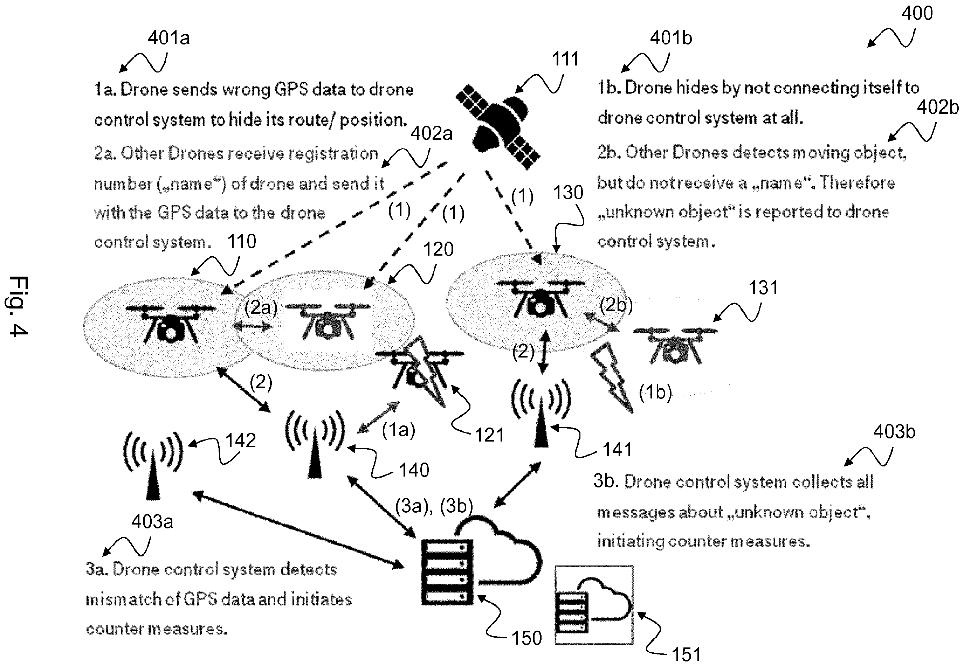

Fig. 4 shows a schematic diagram illustrating an enhanced drone control system 400 according to the disclosure which tackles the security gaps shown in Fig. 2. The enhanced drone control system 400 includes a plurality of drones 110, 120, 130 or UAVs connected via a mobile network 140, 141, 142 to a ground control system 150 with (optionally redundant) multiple processing sites 151 for processing the processing/computing tasks of the ground control system 150. The enhanced drone control system 400 may perform the following tasks: In a first block 401 a, drone 130 sends wrong GPS data to ground control system 150 to hide its route/position 121. In a second block 401 b, drone 131 hides by not connecting itself to ground control system 150 at all. In a third block 402a, other drones 130 receive registration number ("name") of drone 131 and send it with the GPS data to the ground control system 150. In a fourth block 402b, other drones 130 detect moving object 131, but do not receive a "name". Therefore "unknown object" is reported to ground control system 150. In a fifth block 403a, drone ground system 150 detects mismatch of GPS data and initiates counter measures. In a sixth block 403b, ground control system 150 collects all messages about "unknown object", initiating counter measures.

The main advantages of such an enhanced drone control system 400 are as follows: An automated, zero-touch mechanism, enabling fast detection and reaction, at low additional cost, within existing system infrastructure, in frequented areas, especially sensitive to incidents.

As such the drone control system 400 prevents drones/ UAS 121, 131 purposely reporting wrong GPS location data, while strongly increasing the likelihood to detect drones/ UAS not connected to the ground control system 150 as shown in Fig. 4. The more densely the areas are frequented by drones/ UAS, the more efficient the system will work.

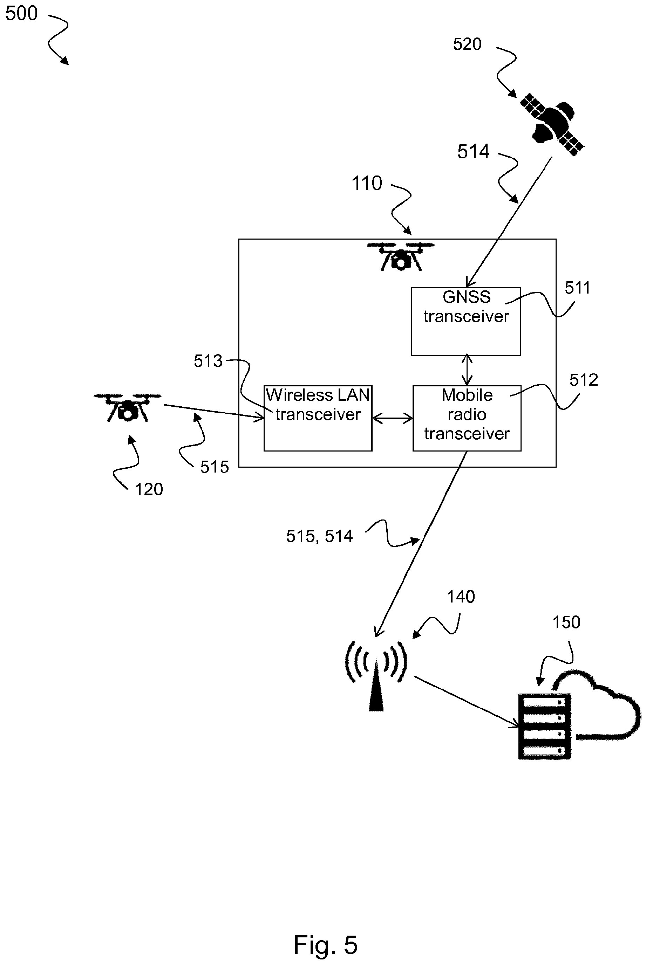

Fig. 5 shows a schematic diagram illustrating a UAV control system 500 according to the disclosure. The UAV control system 500 may be a general representation of a drone control system 300, 400 as described above with respect to Figures 3 and 4.

The UAV control system 500 includes an air traffic control system 150, e.g. a ground control system or an ATM/UAV control system as described above with respect to Figures 1 to 4. The traffic control system 150 may be located at the ground or may be satellite-based or implemented in the cloud, for example. The UAV control system 500 includes one or more processors for processing the different processing tasks of the UAV control system 500. For example, an UAV control system 500 may include a multitude of servers or computer hardware located at one or different geographical locations.

The UAV control system 500 further includes a plurality of UAVs, e.g. UAVs 110, 120, 130 shown in Figures 2 to 4, which are registered via a mobile network, e.g. via base stations 140, 141, 142 as shown in Figures 2 to 4 and/or further network nodes, with the air traffic control system 150.

Each UAV of the UAVs 110, 120, 130 includes a GNSS receiver 511, a wireless local area network (LAN) transceiver 513 and a mobile radio transceiver 512 as shown for the exemplary UAV 110 in Fig. 5. The GNSS receiver 511 may be a GPS receiver, for example or any other GNSS receiver. The wireless LAN transceiver 513 may be for example a WiFi transceiver or a Bluetooth transceiver or a Zigbee transceiver or any other wireless LAN transceiver. The mobile radio transceiver 512 may be for example an LTE transceiver, a 3G, 4G or 5G transceiver or any other mobile radio transceiver. Besides, each UAV may include a processor for processing some or all processing/computing tasks of the GNSS receiver 511, wireless LAN transceiver 513 and mobile radio transceiver 512 as described in the following.

The GNSS receiver 511 is configured to receive location information 514 from one or more satellites 520 for indicating a location of the UAV 110.

The wireless LAN transceiver 513 is configured to detect at least one nearby object 120, e.g. a nearby drone or UAV, based on a wireless receive signal received from the at least one nearby object 120. The wireless receive signal includes one of the following registration information 515: a registration number of the at least one nearby object 120, a faked registration number of the at least one nearby object 120 or a suppressed registration number of the at least one nearby object 120, e.g. according to the scenarios as described above with respect to Figures 3 and 4.

The mobile radio transceiver 512 is configured to transmit the registration information 515 of the at least one nearby object 120 together with the location information 514 indicating the location of the UAV 110 to the air traffic control system 150 via the mobile network represented by the one or more base stations 140.

The air traffic control system 150 is configured to detect an unknown object, e.g. one of the objects 121, 131 as described above with respect to Figures 3 and 4, based on the registration information 515 and the location information 514 received from the plurality of UAVs 110, 120, 130, e.g. as described above with respect to Figures 3 and 4.

The wireless LAN transceiver 513 may be configured to transmit a wireless transmit signal comprising a registration number of the UAV 110, e.g. an identification or name of the UAV or an identification or name of a LAN established by the UAV such as an SSID of the LAN, e.g. as described above with respect to Figures 3 and 4. The mobile radio transceiver 512 may be configured to transmit the registration number of the UAV 110 to the air traffic control system 150.

The mobile radio transceiver 512 may be configured to report an unknown object to the air traffic control system 150 if the registration information 515 includes a suppressed registration number, i.e. no registration number is included in the registration information received from the nearby object 120.

In case that a faked registration is included in the registration information 515 received from the nearby object 120, the UAV 100 usually cannot detect such faked information. Therefore, the registration information 515 is sent together with the location information 514 of the UAV 110 to the UAV control system 150. The faked registration number is associated with a location of the at least one nearby object 120 not corresponding to a location derived from satellite-based location data. Such missing correspondence can be detected by the UAV control system 150 when comparing information received from a plurality of UAVs.

The air traffic control system 150 may include a data base configured to store for each registered UAV 110, 120, 130 the received registration number together with the received location information 514. The air traffic control system 150 may detect an unknown object, e.g. an object 121, 131 as shown in Figures 3 and 4, based on matching the received registration information 515 with location information stored within data base entries of registered UAVs 110, 120, 130.

The data base may be configured to additionally store the registration information 515 of nearby objects 120 received from one or more UAVs 110, 120, 130 together with the location information 514 received from the respective UAVs 110, 120, 130. The air traffic control system may then detect an unknown object 121, 131 based on matching the received registration information 515 and location information 514 with data base entries of registered UAVs and data base entries of nearby objects.

The air traffic control system 150 may detect an unknown object 121, 131 based on correlating the registration information 515 and location information 514 received from multiple UAVs, e.g. UAVs 110, 120, 130 as shown in Figures 3 and 4.

The air traffic control system 150 may process a flight direction and determine an estimated route of a detected unknown object 121, 131 based on the registration information 515 and location information 514 received from multiple UAVs, e.g. the UAVs 110, 120, 130 shown in Figures 3 and 4 and/or further UAVs not shown in the figures. The air traffic control system 150 may initiate emergency procedures based on detecting an unknown object.

While Figure 5 shows an UAV control system 500, a single UAV 110 is exemplarily illustrated in Fig. 5, too. The UAV includes a GNSS receiver 511, a wireless LAN transceiver 513 and a mobile radio transceiver 512 as described above. Besides, the UAV 110 may include a processor for processing some or all processing/computing tasks of the GNSS receiver 511, wireless LAN transceiver 513 and mobile radio transceiver 512.

The GNSS receiver 511 is configured to receive location information 514 from at least one satellite 520 for indicating a location of the UAV 110 as described above. The wireless LAN transceiver 513 is configured to detect at least one nearby object 120 based on a wireless receive signal received from the at least one nearby object 120, the wireless receive signal comprising one of the following registration information 515: a registration number of the at least one nearby object 120, a faked registration number of the at least one nearby object 120 or a suppressed registration number of the at least one nearby object 120. The mobile radio transceiver 512 is configured to transmit the registration information 515 of the at least one nearby object 120 together with the location information 514 indicating the location of the UAV 110 to the air traffic control system 150.

The wireless LAN transceiver 513 may be configured to transmit a registration number of the UAV 110. The mobile radio transceiver 512 may be configured to transmit the registration number of the UAV 110 to the air traffic control system 150. The mobile radio transceiver 512 may be configured to report an unknown object 121, 131 to the air traffic control system 150 if the registration information 515 includes a suppressed registration number, e.g. as described above.

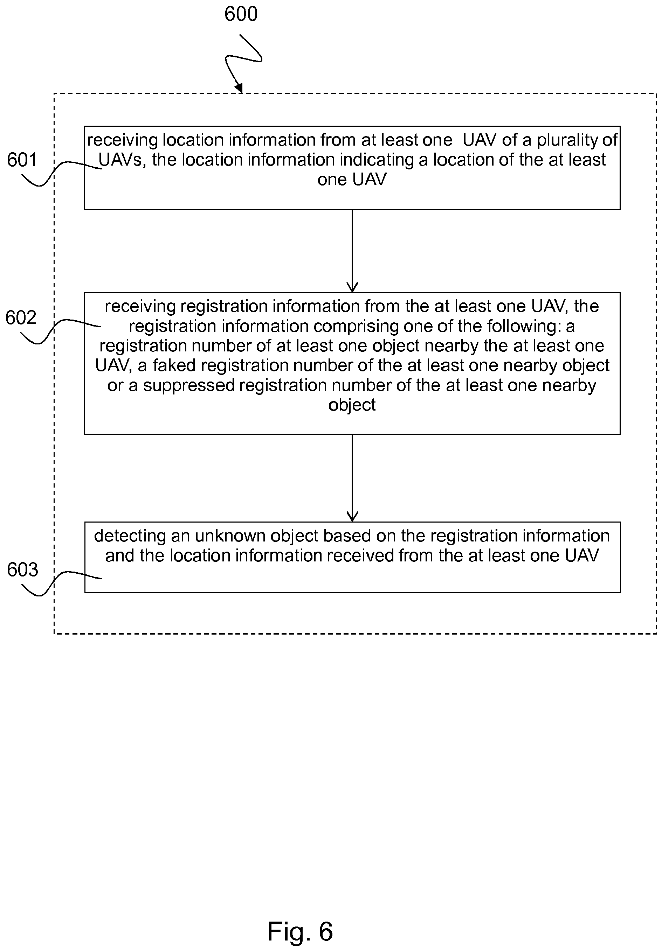

Fig. 6 shows a schematic diagram illustrating a method 600 for detecting an unknown object according to the disclosure.

The method 600 includes: receiving 601 location information, e.g. location information 514 as described above with respect to Fig. 5, from at least one unmanned aerial vehicle (UAV) 110 of a plurality of UAVs, the location information 514 indicating a location of the at least one UAV 110.

The method 600 further includes: receiving 602 registration information, e.g. registration information 515 as described above with respect to Fig. 5, from the at least one UAV 110, the registration information 515 comprising one of the following: a registration number of at least one object 121, 131 nearby the at least one UAV 110, a faked registration number of the at least one nearby object 121 or a suppressed registration number of the at least one nearby object 131, e.g. as described above with respect to Figures 3 to 5.

The method 600 further includes: detecting 603 an unknown object 121, 131 based on the registration information 515 and the location information 514 received from the at least one UAV 110.

The method 600 may be applied in an UAV control system or a drone control system as described above with respect to Figures 1 to 5.

The methods, systems and devices described herein may be implemented as electrical and/or optical circuit within a chip or an integrated circuit or an application specific integrated circuit (ASIC). The invention can be implemented in digital and/or analogue electronic and optical circuitry. The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The present disclosure also supports a computer program product including computer executable code or computer executable instructions that, when executed, causes at least one computer to execute the performing and computing steps described herein, in particular the method 600 as described above with respect to Fig. 6 and the techniques described above with respect to Figs. 1-5. Such a computer program product may include a readable non-transitory storage medium storing program code thereon for use by a computer. The program code may perform the methods and techniques as described above with respect to Figures 1 to 5. Such a computer program product may run on a UAV control system or a drone control system as described above with respect to Figures 1 to 5.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An unmanned aerial vehicle (UAV) control system (300, 400, 500), comprising:
an air traffic control system (150) comprising at least one processor; and
a plurality of UAVs (110, 120, 130) registered via a mobile network (140, 141, 142) with the air traffic control system (150), each (110) of the UAVs (110, 120, 130) comprising:
a global navigation satellite system (GNSS) receiver (511) configured to receive location information (514) from at least one satellite (520) for indicating a location of the UAV (110);
a wireless local area network (LAN) transceiver (513) configured to detect at least one nearby object (120) based on a wireless receive signal received from the at least one nearby object (120), the wireless receive signal comprising one of the following registration information (515): a registration number of the at least one nearby object (120), a faked registration number of the at least one nearby object (120) or a suppressed registration number of the at least one nearby object (120); and
a mobile radio transceiver (512) configured to transmit the registration information (515) of the at least one nearby object (120) together with the location information (514) indicating the location of the UAV (110) to the air traffic control system (150),
wherein the air traffic control system (150) is configured to detect an unknown object (121, 131) based on the registration information (515) and the location information (514) received from the plurality of UAVs (110, 120, 130).

2. The UAV control system (300, 400, 500) of claim 1,
wherein the wireless LAN transceiver (513) is configured to transmit a wireless transmit signal comprising a registration number of the UAV (110); and
wherein the mobile radio transceiver (512) is configured to transmit the registration number of the UAV (110) to the air traffic control system (150).

3. The UAV control system (300, 400, 500) of one of the preceding claims,
wherein the mobile radio transceiver (512) is configured to report an unknown object to the air traffic control system (150) if the registration information (515) includes a suppressed registration number.

4. The UAV control system (300, 400, 500) of one of the preceding claims,
wherein the faked registration number is associated with a location of the at least one nearby object (120) not corresponding to a location derived from satellite-based location data.

5. The UAV control system (300, 400, 500) of one of the preceding claims,
wherein the air traffic control system (150) comprises a data base configured to store for each registered UAV (110, 120, 130) the received registration number together with the received location information (514).

6. The UAV control system (300, 400, 500) of claim 5,
wherein the air traffic control system (150) is configured to detect an unknown object (121, 131) based on matching the received registration information (515) with location information stored within data base entries of registered UAVs (110, 120, 130).

7. The UAV control system (300, 400, 500) of claim 5 or 6,
wherein the data base is configured to additionally store the registration information (515) of the at least one nearby object (120) received from the plurality of UAVs (110, 120, 130) together with the location information (514) received from the respective UAVs (110, 120, 130).

8. The UAV control system (300, 400, 500) of claim 7,
wherein the air traffic control system is configured to detect an unknown object (121, 131) based on matching the received registration information (515) and location information (514) with data base entries of registered UAVs (110, 120, 130) and data base entries of nearby objects.

9. The UAV control system (300, 400, 500) of one of the preceding claims,
wherein the air traffic control system (150) is configured to detect an unknown object (121, 131) based on correlating the registration information (515) and location information (514) received from multiple UAVs (110, 120, 130).

10. The UAV control system (300, 400, 500) of one of the preceding claims,
wherein the air traffic control system (150) is configured to process a flight direction and determine an estimated route of a detected unknown object (121, 131) based on the registration information (515) and location information (514) received from multiple UAVs (110, 120, 130).

11. The UAV control system (300, 400, 500) of one of the preceding claims,
wherein the air traffic control system (150) is configured to initiate emergency procedures based on detecting an unknown object (121, 131).

12. An unmanned aerial vehicle (UAV) (110), comprising:
a GNSS receiver (511) configured to receive location information (514) from at least one satellite (520) for indicating a location of the UAV (110);
a wireless local area network (LAN) transceiver (513) configured to detect at least one nearby object (120) based on a wireless receive signal received from the at least one nearby object (120), the wireless receive signal comprising one of the following registration information (515): a registration number of the at least one nearby object (120), a faked registration number of the at least one nearby object (120) or a suppressed registration number of the at least one nearby object (120); and
a mobile radio transceiver (512) configured to transmit the registration information (515) of the at least one nearby object (120) together with the location information (514) indicating the location of the UAV (110) to the air traffic control system (150),

13. The UAV (110) of claim 12,
wherein the wireless LAN transceiver (513) is configured to transmit a registration number of the UAV (110); and
wherein the mobile radio transceiver (512) is configured to transmit the registration number of the UAV (110) to the air traffic control system (150).

14. The UAV (110) of claim 12 or 13,
wherein the mobile radio transceiver (512) is configured to report an unknown object (121, 131) to the air traffic control system (150) if the registration information (515) includes a suppressed registration number.

15. A method (600) for detecting an unknown object, the method comprising:
receiving (601) location information (514) from at least one unmanned aerial vehicle (UAV) (110) of a plurality of UAVs, the location information (514) indicating a location of the at least one UAV (110);
receiving (602) registration information (515) from the at least one UAV (110), the registration information (515) comprising one of the following: a registration number of at least one object (121, 131) nearby the at least one UAV (110), a faked registration number of the at least one nearby object (121) or a suppressed registration number of the at least one nearby object (131); and
detecting (603) an unknown object (121, 131) based on the registration information (515) and the location information (514) received from the at least one UAV (110).

## Amended claims

### Amended claims in accordance with Rule 137(2) EPC.

1. An unmanned aerial vehicle, UAV (110), comprising:
a global navigation satellite system, GNSS, receiver (511) configured to receive location information (514) from at least one satellite (520) for indicating a location of the UAV (110);
a wireless local area network, LAN, transceiver (513) configured to detect at least one nearby object (120) based on a wireless receive signal received from the at least one nearby object (120), the wireless receive signal comprising one of the following registration information (515): a registration number of the at least one nearby object (120), a faked registration number of the at least one nearby object (120) or a suppressed registration number of the at least one nearby object (120); and
a mobile radio transceiver (512) configured to transmit the registration information (515) of the at least one nearby object (120) together with the location information (514) indicating the location of the UAV (110) to an air traffic control system (150).

2. The UAV (110) of claim 1,
wherein the wireless LAN transceiver (513) is configured to transmit a registration number of the UAV (110); and
wherein the mobile radio transceiver (512) is configured to transmit the registration number of the UAV (110) to the air traffic control system (150).

3. The UAV (110) of claim 1 or 2,
wherein the mobile radio transceiver (512) is configured to report an unknown object (121, 131) to the air traffic control system (150) if the registration information (515) of the at least one nearby object (120) includes a suppressed registration number.

4. An unmanned aerial vehicle, UAV, control system (300, 400, 500), comprising:
an air traffic control system (150) comprising at least one processor; and
a plurality of UAVs (110, 120, 130) according to claim 1 which are registered via a mobile network (140, 141, 142) with the air traffic control system (150),
wherein the air traffic control system (150) is configured to detect an unknown nearby object (121, 131) based on the registration information (515) and the location information (514) received from the plurality of UAVs (110, 120, 130).

5. The UAV control system (300, 400, 500) of claim 4,
wherein the wireless LAN transceiver (513) is configured to transmit a wireless transmit signal comprising a registration number of the UAV (110); and
wherein the mobile radio transceiver (512) is configured to transmit the registration number of the UAV (110) to the air traffic control system (150).

6. The UAV control system (300, 400, 500) of claim 4 or 5,
wherein the mobile radio transceiver (512) is configured to report an unknown object to the air traffic control system (150) if the registration information (515) of the at least one nearby object (120) includes a suppressed registration number.

7. The UAV control system (300, 400, 500) of claim 4 or 5,
wherein the faked registration number is associated with a location of the at least one nearby object (120) not corresponding to a location derived from the GNSS receiver of the at least one nearby object (120).

8. The UAV control system (300, 400, 500) of one of claims 4, 5 or 7,
wherein the air traffic control system (150) comprises a data base configured to store for each registered UAV (110, 120, 130) the received registration number of the at least one nearby object (120) together with the received location information (514) indicating the location of the UAV (110).

9. The UAV control system (300, 400, 500) of claim 8,
wherein the air traffic control system (150) is configured to detect an unknown object (121, 131) based on matching a location of the at least one nearby object (120) indicated by the received registration information (515) of the at least one nearby object (120) with location information stored within data base entries of registered UAVs (110, 120, 130).

10. The UAV control system (300, 400, 500) of claim 8 or 9,
wherein the data base is configured to additionally store the registration information (515) of the at least one nearby object (120) received from the plurality of UAVs (110, 120, 130) together with the location information (514) received from the respective UAVs (110, 120, 130).

11. The UAV control system (300, 400, 500) of claim 10,
wherein the air traffic control system is configured to detect an unknown object (121, 131) based on matching a location of the at least one nearby object (120) indicated by the received registration information (515) of the at least one nearby object (120) and location information (514) indicating the location of the UAV (110) with data base entries of registered UAVs (110, 120, 130) and data base entries of nearby objects.

12. The UAV control system (300, 400, 500) of one of claims 4 to 11,
wherein the air traffic control system (150) is configured to detect an unknown object (121, 131) based on correlating a location of the at least one nearby object (120) indicated by the registration information (515) of the at least one nearby object (120) and location information (514) received from multiple UAVs (110, 120, 130).

13. The UAV control system (300, 400, 500) of one of claims 4 to 12,
wherein the air traffic control system (150) is configured to process a flight direction and determine an estimated route of a detected unknown object (121, 131) based on the registration information (515) of the at least one nearby object (120) and location information (514) received from multiple UAVs (110, 120, 130).

14. The UAV control system (300, 400, 500) of one of claims 4 to 13,
wherein the air traffic control system (150) is configured to initiate emergency procedures based on detecting an unknown object (121, 131).

15. A method (600) for detecting an unknown object, the method comprising:
receiving (601) location information (514) from at least one unmanned aerial vehicle, UAV, (110) of a plurality of UAVs, the location information (514) indicating a location of the at least one UAV (110);
receiving (602) registration information (515) from the at least one UAV (110), the registration information (515) comprising one of the following: a registration number of at least one object (121, 131) nearby the at least one UAV (110), a faked registration number of the at least one nearby object (121) or a suppressed registration number of the at least one nearby object (131); and
detecting (603) an unknown object (121, 131) based on the registration information (515) and the location information (514) received from the at least one UAV (110).
